# EUROPEAN PATENT APPLICATION

(11) **EP 4 821 618 A1**
(43) Date of publication of application: **14.10.2026**
(21) Application number: 26166360.3
(22) Date of filing: 20.03.2026
(51) Int. Cl.: B22F 1/054, B22F 1/17, B22F 9/24, H01M 4/90, H01M 4/92

(54) **TWO-PHASE SYNTHESIS OF PT-SURFACE OF NANOSTAR**

(30) Priority: 31.03.2025 US 202519096431
(71) Applicant: HONDA MOTOR CO., LTD., Tokyo 105-8404 (JP)
(72) Inventor: WU, Haibin, Raymond, 43067 (US)
(74) Representative: Kiwit, Benedikt

(57) **Abstract**

Disclosed is a method for preparing an alloy nanostar, the method including a nanostar synthesis process including combining a first metallic precursor component, a second metallic precursor component, and solvent to provide a first solution, combining the first solution with a third metallic precursor component to provide a second solution, maintaining the second solution at a first selected temperature for a first selected period of time such that an oil-water two phase suspension is formed, and heating the oil-water two phase suspension to a second selected temperature for a second selected period of time sufficient to provide an alloy nanostar. Also described are alloy nanostars having an alloy of at least a first metallic element and a second metallic element, wherein the second metallic element is platinum.

## Description

This application is based on and claims the benefit of priority from U.S. Patent Application No. 19/096,431, filed on March 31,2025.

### TECHNICAL FIELD

The present disclosure is directed to nanostars useful as a catalyst in the oxygen reduction reaction and the hydrogen evolution reaction.

### BACKGROUND

The direct electrochemical oxygen reduction reaction and hydrogen evolution reaction are useful energy technologies for contemporary energy conversion and storage. Proton exchange membrane fuel cells are efficient devices for converting chemical energy to electrical energy, suitable for use in electric vehicles, portable applications, and stationary systems. Fuel cell vehicles possess the capacity to markedly diminish our reliance on fossil fuels such as oil. Fuel cells operate on hydrogen gas instead of gasoline, so fuel cells can also reduce detrimental emissions that contribute to environmental pollution and potential climate change. The most often utilized and efficient catalysts in proton exchange membrane fuel cells remain platinum catalysts. However, the cost and durability of platinum catalysts are the primary challenges hindering their practical usage. Furthermore, a significant portion of the surface area of alloy nanoframe catalysts containing platinum is diminished due to thermal or acid etching processes, resulting in a reduced electrochemical surface area and longevity.

### SUMMARY

The present disclosure is directed to nanostars having an alloy containing platinum. The present disclosure is also directed to methods of making the nanostars disclosed herein, the method including a nanostar synthesis process and optionally an etching process. Also disclosed herein are proton exchange membrane fuel cells having one or more nanostars as described herein, and methods of making and using the same.

### BRIEF DESCRIPTION OF THE DRAWINGS

FIG. 1 shows a schematic of the nanostar synthesis process as described herein.
FIG. 2 shows the transmission electron microscopy (TEM) images of the nanostars prepared in Example I.
FIG. 3 shows the element mapping results as described in Example III.
FIG. 4A shows the XRD comparison of the nanostars of Examples I and II.
FIG. 4B shows TEM images of the nanostars of Example II
FIG. 5A shows cyclic voltammograms (CV) of nanostars, indicating that the CV were stable during 30k durability test.
FIG. 5B shows the calculated electrochemically active surface areas (ECSA) of nanostars in the durability tests.
FIG. 5C shows polarization curves of nanostars as catalysts in oxygen reduction reactions.
FIG. 5D shows the calculated kinetic current (iₖ) of nanostars in the durability tests.
FIG. 6A shows a TEM image of the nanostars prepared according to Example V(a).
FIG. 6B shows a TEM image of the nanostars prepared according to Example V(b).
FIG. 6C shows a TEM image of the nanostars prepared according to Example V(c).
FIG. 6D shows a TEM image of the nanostars prepared according to Example V(d).

### DETAILED DESCRIPTION

The present disclosure is directed to a nanostars having an alloy containing platinum. The present disclosure is also directed to methods of making the nanostars disclosed herein, the method including a nanostar synthesis process and optionally an etching process. Also disclosed herein are proton exchange membrane fuel cells having one or more nanostars as described herein, and methods of making and using the same.

As used herein, a nanostar refers to a star-shaped structure having at least one dimension on the nanoscale. As used here, a "star-shaped" structure refers to a shape having a plurality of points extending from a center of the structure. According to some aspects, each nanostar may have three, four, five, six, seven, or more points.

The nanostars of the present disclosure each have at least one dimension on the nanoscale. For example, each nanostar may have a diameter that is between about 1 and 100 nm, optionally between about 10 and 90 nm, optionally about 10 nm, optionally about 20 nm, optionally about 30 nm, optionally about 40 nm, optionally about 50 nm, optionally about 60 nm, optionally about 70 nm, optionally about 80 nm, and optionally about 90 nm. The present disclosure is further directed to a plurality of nanostars having an average diameter of between about 1 and 50 nm, and optionally between about 5 and 35 nm.

A nanostar according to the present disclosure may include an alloy. As used herein, an "alloy" is a metallic material having two or more metallic elements. According to some aspects, the alloy may include two, three, four, five, or more different metallic elements. Example metallic elements according to aspects of the present disclosure include, but are not limited to, any group IB to group VIIIB metal, such as platinum, cobalt, copper, ruthenium, silver, gold, iron, manganese, and nickel. According to some aspects, at least one of the metallic elements may include platinum.

According to some aspects, the nanostars of the present disclosure may include an alloy having a first metallic element and a second metallic element at a certain molar ratio. In some non-limiting examples, the molar ratio may be between about 1:1 to 1:20, optionally between about 1:1 and 1:10, optionally between about 1:10 and 1:20, optionally about 1:1, optionally about 1:2, optionally about 1:3, optionally about 1:4, optionally about 1:5, optionally about 1:6, optionally about 1:7, optionally about 1:8, optionally about 1:9, optionally about 1:10, optionally about 1:111 optionally about 1:12, optionally about 1:13, optionally about 1:14, optionally about 1:15, optionally about 1:16, optionally about 1:17, optionally about 1:18, optionally about 1:19, and optionally about 1:20.

According to some aspects, the nanostars of the present disclosure may include an alloy having a substantially even distribution of metallic elements.

Alternatively, the nanostars may include an alloy having an uneven distribution of metallic elements. For example, the nanostars may include an alloy having a first metallic element, wherein the concentration of the first metallic element is higher at one or more surface structures of the nanostars than in at least a second area of the nanostars, such as the body of the nanostar. The one or more surface structures may include, for example, one or more edges of the nanostars. In this example, at least about 20% by weight of the first metallic element contained by the nanostars may be provided on the one or more surface structures of the nanostars, optionally at least about 25%, optionally at least about 30%, optionally at least about 35%, optionally at least about 40%, optionally at least about 45%, optionally at least about 50%, optionally at least about 55%, optionally at least about 60%, optionally at least about 65%, optionally at least about 70%, optionally at least about 75%, optionally at least about 80%, optionally at least about 85%, optionally at least about 90%, optionally at least about 95%, optionally at least about 99%, and optionally about 100%.

Additionally or alternatively, the nanostars may include an alloy having a first metallic element, wherein the concentration of the first metallic element is higher in the core of the nanostars than in at least a second area of the nanostars, such as the non-core body. As used herein, a "core" refers to the central interior mass of a structure. In some non-limiting examples, the core of a nanostar may include between about 20 to 75% by mass of the nanostar. In some non-limiting examples, the core of a nanostar may refer to the central interior mass of the nanostar having a diameter of between about 3 and 30 nm. In this example, at least about 20% by weight of the first metallic element contained by the nanostars may be provided in the core of the nanostars, optionally at least about 25%, optionally at least about 30%, optionally at least about 35%, optionally at least about 40%, optionally at least about 45%, optionally at least about 50%, optionally at least about 55%, optionally at least about 60%, optionally at least about 65%, optionally at least about 70%, optionally at least about 75%, optionally at least about 80%, optionally at least about 85%, optionally at least about 90%, optionally at least about 95%, optionally at least about 99%, and optionally about 100%.

Additionally or alternatively, the nanostars may include an alloy having a second metallic element, wherein the concentration of the second metallic element is higher in the non-core body of the nanostars than in at least a second area of the nanostars, such as the core and/or one or more surface structures. In this example, at least about 20% by weight of the second metallic element contained by the nanostars may be provided in the non-core body of the nanostars, optionally at least about 25%, optionally at least about 30%, optionally at least about 35%, optionally at least about 40%, optionally at least about 45%, optionally at least about 50%, optionally at least about 55%, optionally at least about 60%, optionally at least about 65%, optionally at least about 70%, optionally at least about 75%, optionally at least about 80%, optionally at least about 85%, optionally at least about 90%, optionally at least about 95%, optionally at least about 99%, and optionally about 100%.

According to some aspects, the nanostars may be hollow. As used herein, the term "hollow" refers to a structure having a space in its center. For example, a hollow nanostar may include a nanostar with unfilled space forming all or a portion of its core.

The present disclosure is also directed to methods of making nanostars as disclosed herein. The method may include a nanostar synthesis process and optionally an etching process.

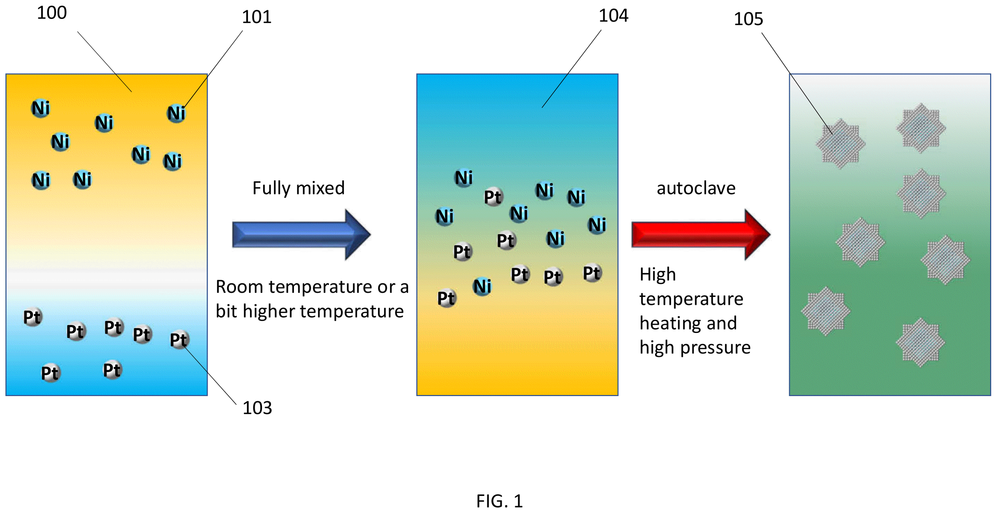

FIG. 1 shows a schematic of an example nanostar synthesis process as described herein. In particular, FIG. 1 shows a process in which an oil-water two phase suspension 100 containing at least a first metallic element 101 and a second metallic element 102 is used to provide alloy nanostars 105 by way of an oil-water two phase suspension 104 having first metallic element 101 and second metallic element 102.

According to some aspects, the oil-water two phase suspension may be provided by first providing at least a first metallic precursor component and a second metallic precursor component in a low- or no-oxygen environment. The first and second metallic precursor components may each independently include an organic compound of a metallic element or a carbonyl compound of a metallic element. In some non-limiting examples, the first metallic precursor component and the second metallic precursor component may include a first metallic element and a second metallic element, respectively, the first metallic element being the same as or different from the second metallic element. According to some aspects, the first metallic element may include a transition metal. According to some aspects, the second metallic element may include a metal having a zero oxidation valence number.

According to some aspects, the organic compound of a metallic element may be a metal acetylacetonate, a metal acetate, a metal carbonyl, or a combination thereof.

In some non-limiting examples, the first metallic precursor component includes an organic compound of a first metallic element, wherein the first metallic element is a transition metal. For example, the first metallic precursor component may include nickel acetylacetonate, cobalt acetylacetonate, copper acetylacetonate, ruthenium acetylacetonate, or a combination thereof.

In some non-limiting examples, the second metallic precursor component includes a carbonyl compound of a second metallic element, wherein the second metallic element is a metal having a zero oxidation valence number, such as cobalt, nickel, iron, or a combination thereof.

The nanostar synthesis process may include combining at least the first metallic precursor component and the second metallic precursor component at a certain weight or molar ratio. In some non-limiting examples, the method may include combining at least the first metallic precursor component and the second metallic precursor component at a weight ratio of between about 1:1 and 1:10, optionally about 1:1, optionally about 1:2, optionally about 1:3, optionally about 1:4, optionally about 1:5, optionally about 1:6, optionally about 1:7, optionally about 1:8, optionally about 1:9, and optionally about 1:10.

According to some aspects, the first metallic precursor component and the second metallic precursor component may be provided in a low- or no-oxygen environment. For example, the first metallic precursor component and the second metallic precursor be provided in a vessel from which the oxygen has been partially or completely removed, such as by a vacuum and/or by blowing with an inert gas (e.g., Ar, N₂). It should be understood that the oxygen may be partially or completely removed prior to, during, and/or after the combination the first metallic precursor component and the second metallic precursor component.

According to some aspects, the nanostar synthesis process may include combining the first metallic precursor component and the second metallic precursor component with a solvent to provide a first solution, optionally in the low- or no-oxygen environment. In some non-limiting examples, the solvent may include an aliphatic amine, such as oleylamine, hexadecylamine, dodecyalamine, tetradecylamine, and/or octadecylamine; an organic solvent, such as octadecene; an acid, such as oleic acid; or a combination thereof. In some non-limiting examples, the solvent may include a liquid amine. Additionally or alternatively, the solvent may include one or more solid amines dissolved in another solvent, such as an organic solvent as disclosed herein. According to some aspects, all or a portion of the solvent may have a boiling point of at least 100 °C. It should be understood that providing the first solution may include dissolving the first metallic precursor component and the second metallic precursor component in the solvent, which may include sonication. In some non-limiting examples, sonication may be performed for between 1 minute and 1 hour, optionally between about 10 and 30 minutes, and optionally about 20 minutes.

According to some aspects, the first metallic precursor component may be provided in the first solution at a concentration of between about 1 and 10 mg/mL, optionally between about 1 and 5 mg/mL, optionally between about 2 and 3 mg/mL, optionally between about 2.3 and 2.7 mg/L, and optionally about 2.5 mg/mL.

According to some aspects, the second metallic precursor component may be provided in the first solution at a concentration of between about 1 and 10 mg/mL, optionally between about 1 and 5 mg/mL, optionally between about 2 and 2.4 mg/mL, and optionally about 2.2 mg/mL.

The nanostar synthesis process may further include combining the first solution with a third metallic precursor component containing a third metallic element in order to provide a second solution. According to some aspects, the third metallic element may include platinum. In some non-limiting examples, the third metallic precursor component may include chloroplatinic acid, a platinum-containing salt (e.g., potassium chloroplatinate, sodium chloroplatinate, platinum chloride), or a combination thereof. In some non-limiting examples, the third metallic precursor component may be provided as a solution having a solvent. The solvent may be the same as or different from the solvent of the first solution described herein. For example, the solvent may include an aliphatic amine, such as oleylamine, hexadecylamine, dodecyalamine, tetradecylamine, and/or octadecylamine; an organic solvent, such as octadecene; an acid, such as oleic acid; water; or a combination thereof.

In some non-limiting examples, the third metallic precursor component may include a chloroplatinic acid hexahydrate solution. However, the present disclosure is not necessarily limiting to this example. For example, according to some aspects, the third metallic precursor component may include a third metallic element that is any precious metal, such as gold, palladium, iridium, or a combination thereof. The third metallic precursor component may thus include, for example, chloroauric acid, palladium chloride, or a combination thereof.

According to some aspects, the second solution may have a certain weight or molar ratio of the first metallic precursor component to the third metallic precursor component, including but not limiting to between about 1:1 and 20:1, optionally about 1:1, optionally about 2:1, optionally about 3:1, optionally about 4:1, optionally about 5:1, optionally about 6:1, optionally about 7:1, optionally about 8:1, optionally about 9:1, optionally about 10:1, optionally about 11:1, optionally about 12:1, optionally about 13:1, optionally about 14:1, optionally about 15:1, optionally about 16:1, optionally about 17:1, optionally about 18:1, optionally about 19:1, and optionally about 20:1.

According to some aspects, the second solution may have a certain weight or molar ratio of the second metallic precursor component to the third metallic precursor component, including but not limiting to between about 15:1 and 1:1, optionally about 1:1, optionally about 2:1, optionally about 3:1, optionally about 4:1, optionally about 5:1, optionally about 6:1, optionally about 7:1, optionally about 8:1, optionally about 9:1, optionally about 10:1, optionally about 11:1, optionally about 12:1, optionally about 13:1, optionally about 14:1, optionally about 15:1

It should be understood that the solvent of the second solution may include the solvent of the first solution and the solvent of the third metallic precursor solution, if provided. In the example wherein the solvent of the first solution is different from the solvent of the third metallic precursor solution, the solvent of the second solution may thus include a solvent having at least a first component and a second component. In some non-limiting examples, the first component may include an aliphatic amine. In some non-limiting examples, the second component may include water. According to some aspects, the solvent of the second solution may include a first component and a second component at a volume ratio of between about 0.5:1 and 5:1, optionally about 0.5:1, optionally about 1:1, optionally about 1.5:1, optionally, optionally about 2:1, optionally about 2.5:1, optionally, optionally about 3:1, optionally about 3.5:1, optionally, optionally about 4:1, optionally about 4.5:1, optionally, and optionally about 5:1.

According to some aspects, the nanostar synthesis process may include maintaining the second solution at a first selected temperature for a first selected period of time such that an oil-water two phase suspension is formed.

According to some aspects, the first selected temperature may be between about 10 and 100 °C, optionally between about 20 and 95 °C, optionally between about 20 and 75 °C optionally between about 20 and 60 °C, optionally between about 30 and 50 °C, and optionally about 40 °C.

According to some aspects, the first selected period of time may be between 1 minute and 90 hours, optionally between about 30 minutes and 72 hours, optionally between about 1 and 72 hours, optionally between about 12 and 48 hours, optionally between about 18 and 36 hours, and optionally about 25 hours.

In some non-limiting examples, the second solution may be mixed, stirred, and/or otherwise agitated while at the selected temperature for the selected period of time. For example, the second solution may be mixed with a mixer, such as the Eppendorf Thermomixer.

The nanostar synthesis process may further include heating the oil-water two phase suspension to a second selected temperature for a second selected period of time sufficient to provide a nanostar as described herein. According to some aspects, the second selected temperature may be greater than the first selected temperature. In some non-limiting examples, the second selected temperature may be between about 100 and 250 °C, optionally between about 120 and 235 °C, optionally between about 150 and 185 °C optionally between about 160 and 175 °C, and optionally between about 165 and 175 °C.

According to some aspects, the second selected period of time may be between 1 minute and 90 hours, optionally between about 30 minutes and 72 hours, optionally between about 1 and 24 hours, optionally between about 1 and 5 hours, optionally between about 2 and 4 hours, and optionally about 3 hours.

According to some aspects, the oil-water two phase suspension may be maintained at the second selected temperature for the second selected period of time in a reduced pressure environment, such as an autoclave. As used herein, a "reduced pressure environment" refers to an environment wherein the pressure is less than the average atmospheric pressure at sea level on Earth.

The nanostar synthesis process may further include cooling the oil-water two phase suspension from the second selected temperature to a third selected temperature. The third selected temperature may be around normal room temperature, that is, between about 20 and 25 °C, and optionally between about 20 and 22 °C.

The nanostar synthesis process may further include one or more washing processes sufficient to separate the nanostars from unreacted precursor and/or solvent. In some non-limiting example, each washing process may independently include one or more of adding one or more solvents to the oil-water two phase suspension, centrifuging, and discarding the resultant supernatant. In some non-limiting examples, the solvent may include an organic solvent, such as toluene, chloroform, acetone, ethanol, hexane, or a combination thereof. According to some aspects, the synthesis process may include one, two, three, or more washing processes.

According to some aspects, the nanostar provided by the nanostar synthesis process may include a first alloy as described herein. The first alloy may include one or more of the first metallic element, the second metallic element, and the third metallic element. In some non-limiting examples, the first alloy includes only the first metallic element and the second metallic element as described herein, wherein at least one of the metallic elements is platinum. In some non-limiting examples, the first alloy includes only the first metallic element and the third metallic element as described herein, wherein at least one of the metallic elements is platinum.

It has been surprisingly found that the nanostar synthesis process as described herein provides a nanostar having the first alloy, the first alloy having an uneven distribution of metallic elements. For example, the first alloy may include the first metallic element and the third metallic element as described herein, with a higher concentration of the third metallic element at a surface and/or surface structure of the nanostar and/or in the core of the nanostar relative to the non-core body of the nanostar. In this example, the non-core body of the nanostar may have a higher concentration of the first metallic element.

The method of the present disclosure may further include an etching process sufficient to selectively remove at least a portion of one or more metallic elements of the first alloy as disclosed herein. According to some aspects, the etching process may selectively remove at least a portion of the one or more non-platinum metallic elements.

According to some aspects, the etching process may include providing a dispersion of the nanostars provided by the nanostar synthesis process in a solvent. According to some aspects, the solvent may include an acid component and a polar organic component. Non-limiting examples of acid components may include formic acid, diluted sulfuric acid, diluted perchloric acid, diluted hydrochloric acid, acetic acid, other organic acid(s), or a combination thereof. Non-limiting examples polar organic components may include an alcohol, such as methanol, ethanol, and/or iso-propanol, acetone, acetonitrile, or a combination thereof.

According to some aspects, the solvent may include a volume of the acid component and a volume of the polar organic component at a ratio between about 10:1 and 1:10, optionally between about 1:1 and 1:10, optionally between about 1:1 and 1:5, optionally between about 1:1 and 1:3, and optionally about 1:2.

According to some aspects, the nanostars may be provided in the dispersion at a concentration of between about 0.01 and 10 mg/mL, optionally between about 0.01 and 5 mg/mL, optionally between about 0.01 and 1 mg/mL, and optionally about 0.05 mg/mL.

According to some aspects, the etching process may include maintaining the dispersion at a first selected temperature for a first selected period of time sufficient to selectively remove at least a portion of the one or more non-platinum metallic elements.

According to some aspects, the first selected temperature may be between about 1 and 100 °C, optionally between about 10 and 80 °C, optionally between about 20 and 75 °C optionally between about 20 and 60 °C, optionally between about 30 and 50 °C, and optionally about 40 °C.

According to some aspects, the first selected period of time may be between 1 minute and 14 days, optionally between about 1 minute and 7 days, optionally between about 1 minute and 2 days, optionally between about 12 and 30 hours, and optionally about 24 hours.

In some non-limiting examples, the second solution may be mixed, stirred, and/or otherwise agitated while at the selected temperature for the selected period of time. For example, the second solution may be mixed with a mixer, such as the Eppendorf Thermomixer.

According to some aspects, the nanostars provided by the nanostar synthesis process may be subjected to an etching process in a low- or no-oxygen environment as described herein. For example, the dispersion of the nanostars provided in a solvent may be provided in a vessel from which the oxygen has been partially or completely removed, such as by a vacuum and/or by blowing with an inert gas. It should be understood that the oxygen may be partially or completely removed prior to, during, and/or after maintaining the dispersion at the first selected temperature for the first selected period of time sufficient to selectively remove at least a portion of one or more metallic elements contained by the nanostar. According to some aspects, the one or more metallic elements at least partially removed by the etching process may include one or more non-platinum metallic elements.

The etching process may further include one or more washing processes sufficient to separate the nanostars from unreacted precursor and/or solvent. In some non-limiting example, each washing process may independently include one or more of adding one or more solvents to the dispersion, centrifuging, and discarding the resultant supernatant. In some non-limiting examples, the solvent may include an aqueous solvent, such as water (including DI water), methanol, ethanol, acetone, acetonitrile, other polar organic solvents , or a combination thereof. According to some aspects, the synthesis process may include one, two, three, or more washing processes.

The present disclosure is also directed to methods of using the nanostars as described herein. For example, the method may include incorporating the nanostars in a proton exchange membrane fuel cell. Additionally or alternatively, the method may include using the nanostars catalyze the hydrogen evolution reaction and/or the oxygen reduction reaction. As used here, the hydrogen evolution reaction refers to a chemical reaction that yields H₂, whereas the oxygen reduction reaction refers to the chemical process in which molecular oxygen (O₂) is reduced to water (H₂O) by gaining electrons.

The present disclosure is further directed to proton exchange membrane fuel cells containing the nanostars as described herein, wherein the proton exchange membrane fuels cell may include one or more electrodes and electrolytes as known in the art. In some non-limiting examples, the present disclosure is directed to an electrode having nanostars as disclosed herein. The electrode may include a cathode material or an anode material combined with the nanostars as described herein. The cathode or anode material may include, for example, an ionomer, a carbon, or a combination thereof. Also disclosed herein are proton exchange membrane fuel cells having at least one electrode as disclosed herein.

While the aspects described herein have been described in conjunction with the example aspects outlined above, various alternatives, modifications, variations, improvements, and/or substantial equivalents, whether known or that are or may be presently unforeseen, may become apparent to those having at least ordinary skill in the art. Accordingly, the example aspects, as set forth above, are intended to be illustrative, not limiting. Various changes may be made without departing from the spirit and scope of the disclosure. Therefore, the disclosure is intended to embrace all known or later-developed alternatives, modifications, variations, improvements, and/or substantial equivalents.

Thus, the claims are not intended to be limited to the aspects shown herein, but are to be accorded the full scope consistent with the language of the claims, wherein reference to an element in the singular is not intended to mean "one and only one" unless specifically so stated, but rather "one or more." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

Herein, the recitation of numerical ranges by endpoints (e.g. between about 50:1 and 1:1, between about 100 and 500 °C, between about 1 minute and 60 minutes) include all numbers subsumed within that range, for example, between about 1 minute and 60 minutes includes 21, 22, 23, and 24 minutes as endpoints within the specified range. Thus, for example, ranges 22-36, 25-32, 23-29, etc. are also ranges with endpoints subsumed within the range 1-60 depending on the starting materials used, temperature, specific applications, specific embodiments, or limitations of the claims if needed. The Examples and methods disclosed herein demonstrate the recited ranges subsume every point within the ranges because different synthetic products result from changing one or more reaction parameters. Further, the methods and Examples disclosed herein describe various aspects of the disclosed ranges and the effects if the ranges are changed individually or in combination with other recited ranges.

Further, the word "example" is used herein to mean "serving as an example, instance, or illustration." Any aspect described herein as "example" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof" may be A only, B only, C only, A and B, A and C, B and C, or A and B and C, where any such combinations may contain one or more member or members of A, B, or C. Nothing disclosed herein is intended to be dedicated to the public regardless of whether such disclosure is explicitly recited in the claims.

As used herein, the term "about" and "approximately" are defined to being close to as understood by one of ordinary skill in the art. In one non-limiting embodiment, the term "about" and "approximately" are defined to be within 10%, preferably within 5%, more preferably within 1%, and most preferably within 0.5%.

The examples are put forth so as to provide those of ordinary skill in the art with a complete disclosure and description of how to make and use the present invention, and are not intended to limit the scope of what the inventors regard as their invention nor are they intended to represent that the experiments below are all or the only experiments performed. Efforts have been made to ensure accuracy with respect to numbers used (e.g. amounts, dimensions, etc.) but some experimental errors and deviations should be accounted for.

### EXAMPLES

### EXAMPLE I: Synthesis of Pt-Ni Nanostars

First, 25 mg of nickel acetylacetonate and 22 mg of dimanganese decacarbonyl were loaded in a 50 mL centrifuge tube where oxygen was removed through Ar blowing for 20 minutes. Then, 10 mL of oleylamine (OLA, 70%) was added into the centrifuge tube. The mixture was sonicated for 20 minutes in order to dissolve nickel and manganese compounds in the OLA. In sequence to the sonication of the solution, 5 mL of chloroplatinic acid solution (2 mg/mL chloroplatinic acid hexahydrate aqueous solution) was introduced into the tube. The tube was placed in the Eppendorf Thermomixer kept at 40 °C for 25 hours.

As the solution turned to a brownish oil-water two phase suspension, the mixture was transferred to a 100 mL autoclave. The sealed autoclave was placed into an oven that was already heated up to about 165 to 170 °C for 3 hrs. After the reaction finished, the autoclave was cooled down to room temperature. Then, 10 mL of toluene (99.9%) was added. The products were separated by centrifuging at 3000 rpm for 2 minutes. The supernatant was discarded. Then, 10 mL of toluene were then added to the sediment, and the mixture was centrifuged at 4000 rpm for 5 min. The washing procedure was repeated twice to remove unreacted precursors and surfactant. The Pt-Ni nanostars were stored in hydrophobic solvents (e.g., hexane, toluene and/or chloroform) before characterization.

### EXAMPLE II: Etching of Pt-Ni Nanostars

First, 10 mg of the Pt-Ni nanostars prepared in Example I were dispersed in 20 mL of mixed solution containing formic acid and methanol (1:2 v/v ratio). The solution was then loaded into 50 mL of centrifuge tube. After oxygen was removed through Ar blowing for 20 minutes, the reaction solution was placed in Eppendorf Thermomixer, stirred, and kept at 30 °C for 24 hours. The products were separated by centrifuging at 3000 rpm for 2 minutes. The supernatant was discarded, and 5 mL of DI water was then added to the sediment. The mixture was centrifuged at 4000 rpm for 5 minutes. The washing procedure was repeated twice to remove unreacted precursors and surfactant. The Pt-Ni hollow structures were stored in hydrophilic solvents (e.g., methanol, ethanol and acetone) before characterization.

### EXAMPLE III: Characterization of Nanostars

The surface morphologies of the nanostars prepared in Example II were investigated by a scanning electron microscope (SEM, QUANTA FEG 650) from FEI with a field emitter as electron source. A Bruker D8 Advance X-ray diffractometer with Cu Kα radiation operated at a tube voltage of 40 kV and a current of 40 mA was used to obtain X-ray diffraction (XRD) patterns. Transmission electron microscopy (TEM) images were captured using an FEI Tecnai 20 microscope with an ,accelerating voltage of 200 kV. Energy Dispersive X-Ray spectrometer (EDS) mapping image and the high-angle annular dark-field (HAADF) image were collected by employing Thermo Fisher Spectra 300 S/TEM with an accelerating voltage of 300 kV.

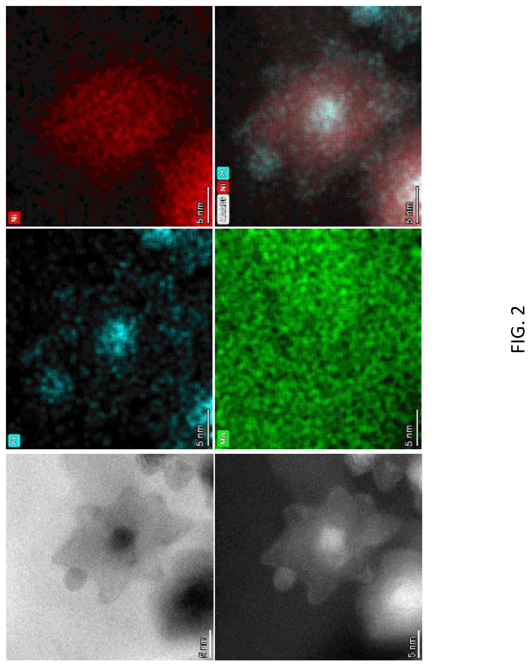

FIG. 2 shows the TEM images of the nanostars prepared in Example I. The morphology indicates that the Pt-Ni is in the shape of a four-to-six-pointed star. Based on the element mapping results, the manganese from the synthesis process seems out of the Pt-Ni structure as background.

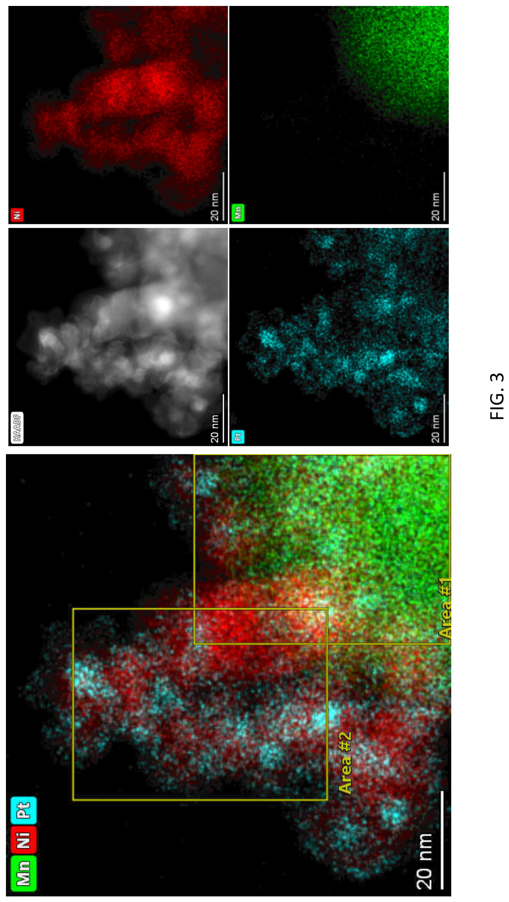

FIG. 3 shows the element mapping results of the nanostars prepared in Example I. The images show the element mapping for an area at a point of a nanostar. These results suggest that the platinum is only located on the surface edge or core of the nanostars, but not in the main body of the structure. Accordingly, the Pt-Ni nanostars disclosed herein have a relatively greater surface area of platinum per quantity of platinum compared to other catalyst structures.

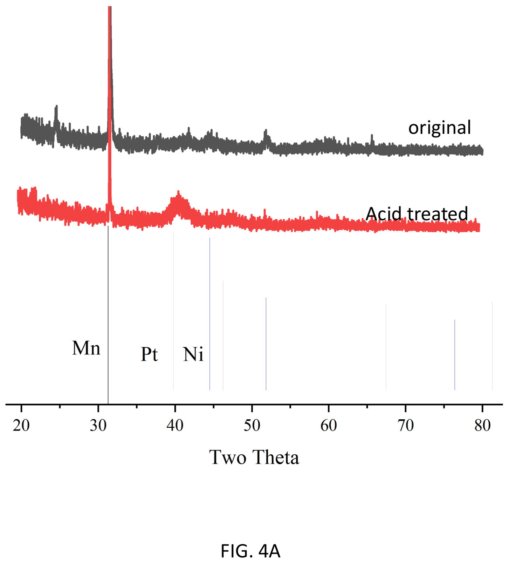

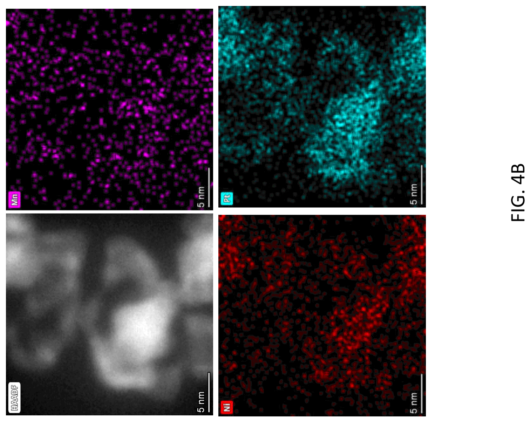

FIG. 4A shows the XRD comparison of the nanostars of Examples I and II, that is, before and after the etching process, respectively. FIG. 4B shows a TEM image of the nanostars of Example II, that is, after the etching process. Based on FIGS. 4A and 4B, it can be concluded that the etching process removes a substantial amount of the nickel provided in the body of the nanostar, a majority of which is made up of nickel. In addition, it was hypothesized that the etching may reconstruct the distribution of other elements, such as platinum, in the core. The result was a hollow nanostar. Surprisingly, the etching process also increased the alloying of the nanostars prepared in Example I.

### EXAMPLE IV: Electrochemical Measurements

Electrochemical measurements were conducted on an electrochemical workstation at ambient temperature (25 °C), utilizing a three-electrode electrochemical configuration with a rotating disk electrode (RDE) device. A glassy carbon working electrode (GCE, 5 mm inner diameter, 0.196 cm²), a graphite rod counter electrode, and a KCl-saturated Ag/AgCl reference electrode were employed for all experiments. All potentials are referenced to a reversible hydrogen electrode (RHE). The potential at the zero current point was selected as the reaction potential of the hydrogen electrode. The potential at the zero current point was established as -0.258 V; thus, the potential measured with an Ag/AgCl electrode can be expressed as E (RHE) = E (Ag/AgCl) + 0.258 V.

To take the measurements, first, the electrode was prepared by directly drop casting the 10 uL of a solution having the nanostars prepared according to Example II dispersed in toluene or ethanol onto the glassy carbon electrode.

The cyclic voltammogram was then obtained to examine the ECSA. A cyclic voltammogram (CV) can easily reflect the surface structure change. Thus, the CV was used to judge the surface structure reconstruction. The cyclic voltammetry scan was performed at a rate of 50 mV s⁻¹ in an Ar-saturated 0.1 M HClO₄ in the corresponding ranges ( 0 ~ 1.05 V, 0.025 ~ 1.1 V, and 0.025 ~ 1.3 V vs. RHE) at a scan rate of 50 mV s⁻¹ in an Ar-saturated 0.1 M HClO₄ solution. Two and a half cycles of CV were recorded to obtain reproducible cycles. It is believed that the high-voltage oxidation (1.3- 1.5 V) treatment can freshen the catalyst surfaces that become inert in long-term durability tests by forming new reactive crystalline facets.

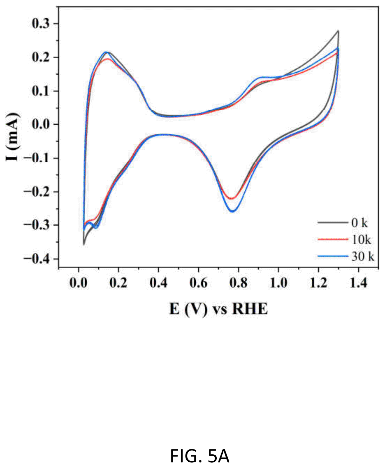

The ORR polarization curves were then recorded, mainly in an O₂-saturated 0.1 M HClO₄ electrolyte at a rotation speed of 1600 rpm and a scan rate of 10 mV s⁻¹. After each designed durability test, ORR polarization curves were remeasured in the same condition as the initial ones. All the results are shown in FIGS. 5A-5D.

In particular, FIG. 5A shows the voltagrams for the nanostars. The curves represent the initial state, after 10k cycles durability, and after 30k cycles durability.

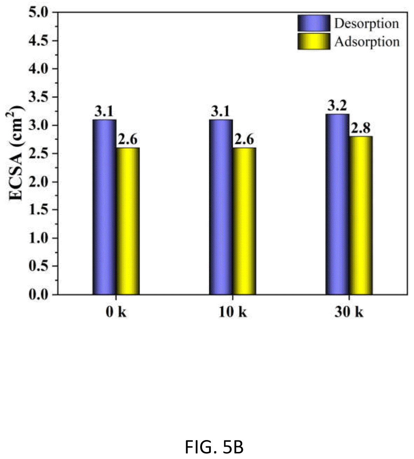

FIG. 5B is the electrochemically active surface (ECSA) calculated from FIG. 5A. The results suggest that the surface area of nanostars is quite stable during durability testing.

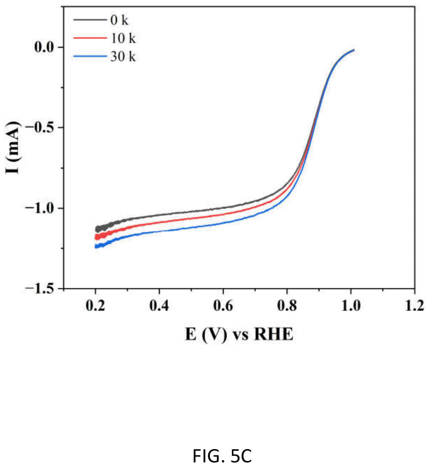

FIG. 5C shows the polarization curves of the nanostars on the oxygen reduction reaction. The curves represent the initial state, after 10k cycles durability, and after 30k cycles durability.

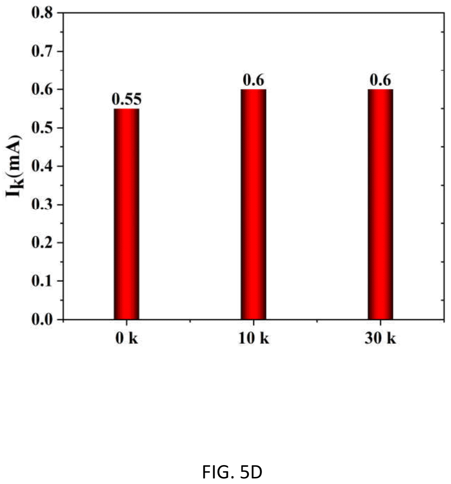

FIG. 5D shows the kinetic current calculated from FIG. 5C. The results suggest that the performance is improved during durability test.

Based on the results and on the estimated platinum content of the Pt-Ni nanostars (i.e., no more than about 2 ug, based on the low amount of platinum precursor used in the synthesis process), it was determined that the nanostars showed a very high catalytic activity relative to mass activity in electrochemical reactions.

### EXAMPLE V(a): Synthesis of Pt-Ni Nanostars

First, 25 mg of nickel acetylacetonate and 22 mg of dimanganese decacarbonyl were loaded in a 50 mL centrifuge tube where oxygen was removed through Ar blowing for 20 minutes. Then, 10 mL of oleylamine (OLA, 70%) was added into the centrifuge tube. The mixture was sonicated for 20 minutes in order to dissolve nickel and manganese compounds in the OLA. In sequence to the sonication of the solution, 1.25 mL of chloroplatinic acid solution (8 mg/mL chloroplatinic acid hexahydrate aqueous solution) was introduced into the tube. The tube was placed in the Eppendorf Thermomixer kept at 40 °C for 25 hours.

As the solution turned to a brownish oil-water two phase suspension, the mixture was transferred to a 100 mL autoclave. The sealed autoclave was placed into an oven that was already heated up to about 165 to 170 °C for 3 hrs. After the reaction finished, the autoclave was cooled down to room temperature. Then, 10 mL of toluene (99.9%) was added. The products were separated by centrifuging at 3000 rpm for 2 minutes. The supernatant was discarded. Then, 10 mL of toluene were then added to the sediment, and the mixture was centrifuged at 4000 rpm for 5 min. The washing procedure was repeated twice to remove unreacted precursors and surfactant. The Pt-Ni nanostars were stored in hydrophobic solvents (e.g., hexane, toluene and/or chloroform) before characterization.

### EXAMPLE V(b): Synthesis of Pt-Ni Nanostars

First, 25 mg of nickel acetylacetonate and 22 mg of dimanganese decacarbonyl were loaded in a 50 mL centrifuge tube where oxygen was removed through Ar blowing for 20 minutes. Then, 10 mL of oleylamine (OLA, 70%) was added into the centrifuge tube. The mixture was sonicated for 20 minutes in order to dissolve nickel and manganese compounds in the OLA. In sequence to the sonication of the solution, 15 mL of chloroplatinic acid solution (0.67 mg/mL chloroplatinic acid hexahydrate aqueous solution) was introduced into the tube. The tube was placed in the Eppendorf Thermomixer kept at 40 °C for 25 hours.

As the solution turned to a brownish oil-water two phase suspension, the mixture was transferred to a 100 mL autoclave. The sealed autoclave was placed into an oven that was already heated up to about 165 to 170 °C for 3 hrs. After the reaction finished, the autoclave was cooled down to room temperature. Then, 10 mL of toluene (99.9%) was added. The products were separated by centrifuging at 3000 rpm for 2 minutes. The supernatant was discarded. Then, 10 mL of toluene were then added to the sediment, and the mixture was centrifuged at 4000 rpm for 5 min. The washing procedure was repeated twice to remove unreacted precursors and surfactant. The Pt-Ni nanostars were stored in hydrophobic solvents (e.g., hexane, toluene and/or chloroform) before characterization.

### EXAMPLE V(c): Synthesis of Pt-Ni Nanostars

First, 25 mg of nickel acetylacetonate and 22 mg of dimanganese decacarbonyl were loaded in a 50 mL centrifuge tube where oxygen was removed through Ar blowing for 20 minutes. Then, 10 mL of oleylamine (OLA, 70%) was added into the centrifuge tube. The mixture was sonicated for 20 minutes in order to dissolve nickel and manganese compounds in the OLA. In sequence to the sonication of the solution, 5 mL of chloroplatinic acid solution (2 mg/mL chloroplatinic acid hexahydrate aqueous solution) was introduced into the tube. The tube was placed in the Eppendorf Thermomixer kept at 40 °C for 25 hours.

As the solution turned to a brownish oil-water two phase suspension, the mixture was transferred to a 100 mL autoclave. The sealed autoclave was placed into an oven that was already heated up to about 165 to 170 °C for 3 hrs. After the reaction finished, the autoclave was cooled down to room temperature. Then, 10 mL of toluene (99.9%) was added. The products were separated by centrifuging at 3000 rpm for 2 minutes. The supernatant was discarded. Then, 10 mL of toluene were then added to the sediment, and the mixture was centrifuged at 4000 rpm for 5 min. The washing procedure was repeated twice to remove unreacted precursors and surfactant. The Pt-Ni nanostars were stored in hydrophobic solvents (e.g., hexane, toluene and/or chloroform) before characterization.

### EXAMPLE V(d): Synthesis of Pt-Ni Nanostars

First, 25 mg of nickel acetylacetonate and 22 mg of dimanganese decacarbonyl were loaded in a 50 mL centrifuge tube where oxygen was removed through Ar blowing for 20 minutes. Then, 10 mL of oleylamine (OLA, 70%) was added into the centrifuge tube. The mixture was sonicated for 20 minutes in order to dissolve nickel and manganese compounds in the OLA. In sequence to the sonication of the solution, 10 mg of chloroplatinic acid was introduced into the tube. The tube was placed in the Eppendorf Thermomixer kept at 40 °C for 25 hours.

As the solution turned to a brownish oil-water two phase suspension, the mixture was transferred to a 100 mL autoclave. The sealed autoclave was placed into an oven that was already heated up to about 165 to 170 °C for 3 hrs. After the reaction finished, the autoclave was cooled down to room temperature. Then, 10 mL of toluene (99.9%) was added. The products were separated by centrifuging at 3000 rpm for 2 minutes. The supernatant was discarded. Then, 10 mL of toluene were then added to the sediment, and the mixture was centrifuged at 4000 rpm for 5 min. The washing procedure was repeated twice to remove unreacted precursors and surfactant. The Pt-Ni nanostars were stored in hydrophobic solvents (e.g., hexane, toluene and/or chloroform) before characterization.

### EXAMPLE VI: Characterization of Nanostars

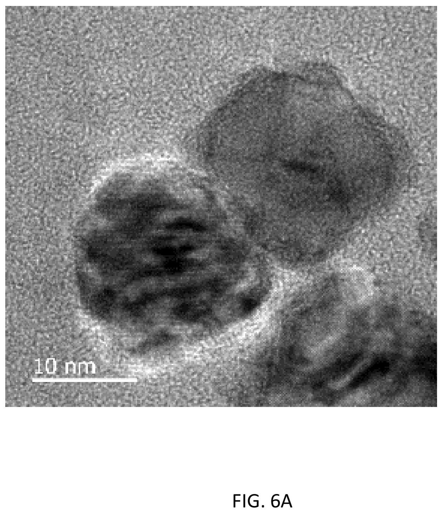

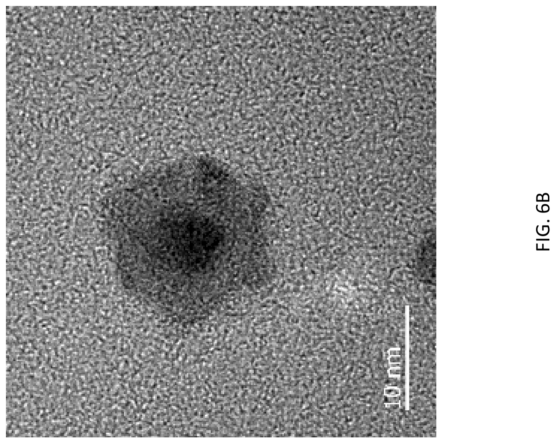

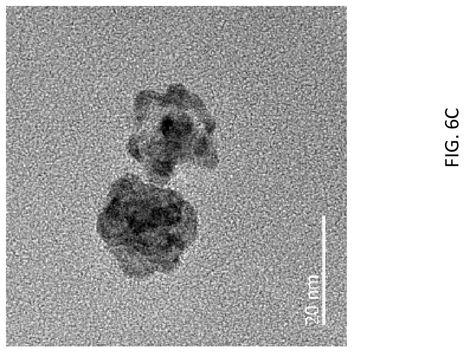

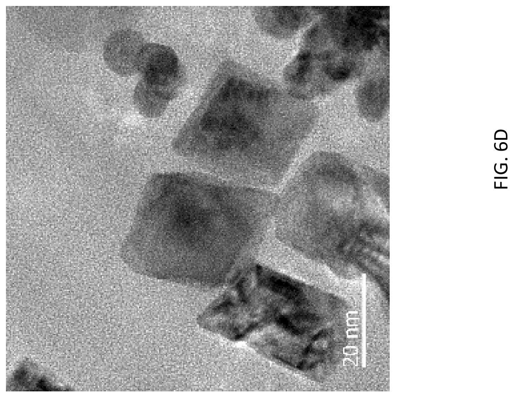

TEM images of the nanostars prepared according to Examples V(a)-V(d) were generated and are shown in FIGS. 6A-6D. In particular, FIG. 6A shows a TEM image of the nanostars prepared according to Example V(a). FIG. 6B shows a TEM image of the nanostars prepared according to Example V(b). FIG. 6C shows a TEM image of the nanostars prepared according to Example V(c). FIG. 6D shows a TEM image of the nanostars prepared according to Example V(d). As explained in Examples V(a)-V(d), the only difference between the preparation processes was the ratio of water to OLA used. Those ratios are shown in Table 1 below.

**TABLE 1**

| **Example** | **Water : OLA Weight Ratio** |
|---|---|
| Example V(a) | 0.125:1 |
| Example V(b) | 1.5:1 |
| Example V(c) | 1:1 |
| Example V(d) | 0:1 |

As shown in FIGS. 6A-6D, the ratio of water to OLA used to prepare the nanostars affected the resulting nanostar shape.

## Claims

1. A method for preparing an alloy nanostar comprising:
a nanostar synthesis process, the nanostar synthesis process comprising:
combining a first metallic precursor component, a second metallic precursor component, and a solvent to provide a first solution,
combining the first solution with a third metallic precursor component to provide a second solution,
maintaining the second solution at a first selected temperature for a first selected period of time such that an oil-water two phase suspension is formed, and
heating the oil-water two phase suspension to a second selected temperature for a second selected period of time sufficient to provide an alloy nanostar.

2. The method of claim 1, wherein the first metallic precursor component comprises a first metallic element, wherein the first metallic element is a transition metal.

3. The method of claim 1 or 2, wherein the second metallic precursor component comprises a second metallic element, wherein the second metallic element is a metal having a zero oxidation valence number.

4. The method of any one of claims 1 to 3, wherein the third metallic precursor comprises a third metallic element, wherein the third metallic element is a precious metal.

5. The method of claim 4, wherein the precious metal is platinum.

6. The method of any one of claims 1 to 5, wherein the second solution comprises a solvent, wherein the solvent comprises an aliphatic amine, water, or a combination thereof.

7. The method of any one of claims 1 to 6, wherein the first selected temperature is between about 20 and 95 °C.

8. The method of any one of claims 1 to 7, wherein the second selected temperature is between about 120 and 235 °C.

9. The method of any one of claims 1 to 8 further comprising an etching process, wherein the etching process comprises:
providing a dispersion of the alloy nanostar in a second solvent, and
maintaining the dispersion at a third selected temperature for a third selected period of time sufficient to selectively remove at least a portion of one or more metallic elements contained by the nanostar.

10. The method of claim 9, wherein the one or more metallic elements at least partially removed by the etching process are non-platinum metallic elements.

11. The method of claim 9 or 10, wherein the second solvent comprises water, methanol, ethanol, acetone, acetonitrile, or a combination thereof.

12. An alloy nanostar comprising an alloy of at least a first metallic element and a second metallic element, wherein the second metallic element is platinum.

13. The alloy nanostar of claim 12, wherein the alloy has an uneven distribution of the first metallic element and the second metallic element.

14. The alloy nanostar of claim 12 or 13, wherein a concentration of the platinum is higher at one or more surface structures of the alloy nanostar than in a second area of the alloy nanostar.

15. The alloy nanostar of claim 14, wherein the one or more surface structures comprise an edge.

16. The alloy nanostar of any one of claims 12 to 15, wherein the alloy nanostar is hollow.

17. The alloy nanostar of any one of claims 12 to 16, wherein the first metallic element is cobalt, copper, ruthenium, silver, gold, iron, manganese, or nickel.

18. The alloy nanostar of any one of claims 12 to 17, wherein the alloy is a high entropy alloy.

19. A proton exchange membrane fuel cell comprising at least one electrode, wherein the at least one electrode comprises the alloy nanostar of any one of claims 12 to 18.

20. The proton exchange membrane fuel cell of claim 19, further comprising an electrolyte.
